# FASCICULE DE BREVET EUROPEEN

(11) **EP 4 339 437 B1**
(45) Date de publication et mention de la délivrance du brevet: **02.07.2025**
(21) Numéro de dépôt: 23197889.1
(22) Date de dépôt: 18.09.2023
(51) Int. Cl.: F02C 7/06, F02C 7/14, F02C 7/232, F02C 9/36

(54) **PROCEDE DE DETECTION DE DYSFONCTIONNEMENT D'UNE VANNE DE RETOUR CARBURANT DANS UN AERONEF**
VERFAHREN ZUR ERKENNUNG VON FEHLFUNKTIONEN EINES KRAFTSTOFFRÜCKLAUFVENTILS IN EINEM FLUGZEUG
METHOD FOR DETECTING A MALFUNCTION OF A FUEL RETURN VALVE IN AN AIRCRAFT

(30) Priorité: 19.09.2022 FR 2209445
(43) Date de publication de la demande: 20.03.2024
(73) Titulaire: Airbus Operations (S.A.S.), 31060 Toulouse Cedex 9 (FR)
(72) Inventeur: BROUQUI, Manon, 31060 TOULOUSE (FR); BRADIER, Matthieu, 31060 TOULOUSE (FR); BENHAMOU, Eric, 31026 TOULOUSE Cedex 3 (FR)
(74) Mandataire: Cabinet Le Guen Maillet

(56) Documents cités:
- FR-A1- 2 999 653
- US-A1- 2021 388 736
- US-A1- 2022 090 515
- US-B2- 9 650 960

## Description

### DOMAINE TECHNIQUE

La présente invention concerne le domaine de la surveillance et de la détection de dysfonctionnement d'une vanne de retour carburant FRV (« Fuel Return Valve » en anglais) dans un aéronef.

### ETAT DE LA TECHNIQUE ANTERIEURE

Dans un aéronef, un générateur d'entraînement intégré IDG (« Integrated Drive Generator » en anglais) est un système associé à chaque moteur de propulsion (turbomachine) afin de convertir l'énergie cinétique dudit moteur de propulsion en énergie électrique pour fournir de l'électricité à l'aéronef. L'IDG fournit potentiellement une alimentation électrique à toutes les charges électriques de l'aéronef.

L'IDG se compose d'un alternateur et d'un entraînement à vitesse constante CSD (« Constant Speed Drive » en anglais) montés dans un même boîtier. Le CSD est un dispositif mécanique permettant d'obtenir une fréquence constante de rotation en entrée de l'alternateur malgré les variations de vitesse de rotation du moteur de propulsion. Ainsi, l'IDG peut délivrer une fréquence fixe (par exemple, 400 Hz) au réseau électrique de l'aéronef.

L'huile est un composant vital de l'IDG, et l'adéquation de la température de cette huile avec les spécifications est un paramètre essentiel pour la longévité et l'efficacité de l'IDG. L'huile utilisée pour le refroidissement de l'IDG circule en circuit fermé et est refroidie, par le biais d'un refroidisseur d'huile (« oil cooler » en anglais), grâce au carburant alimentant le moteur de propulsion auquel est associé l'IDG. De la même manière, un échangeur de chaleur (« heat exchanger » en anglais) est utilisé pour refroidir l'huile utilisée pour la lubrification du moteur à propulsion lui-même. Les échanges de chaleur permettant le refroidissement de ces huiles dépendent donc du flux de carburant alimentant le moteur de propulsion en question.

Or, comme pendant certaines phases de vol, et plus particulièrement en phase de descente, le besoin en carburant du moteur de propulsion est moindre, le carburant alimentant le moteur de propulsion peut ne pas suffire au refroidissement de ces huiles, ce qui réduit la longévité et la performance de l'IDG.

Pour prendre en compte cet aspect, une vanne de retour carburant FRV (« Fuel Return Valve » en anglais) est utilisée, de manière à accroître le flux de carburant pour maintenir le refroidissement de l'huile utilisée pour le refroidissement de l'IDG et de l'huile utilisée pour la lubrification du moteur à propulsion. La FRV contrôle le flux de carburant depuis un système de distribution de carburant au moteur de propulsion vers un système de recirculation renvoyant le carburant chaud vers le réservoir de carburant de l'aéronef. Lorsque la FRV est en position fermée, le système de recirculation est inhibé.

Il ressort de ce qui précède que, lorsque la FRV subit un dysfonctionnement, que ce soit dû à une panne de la FRV elle-même ou à une panne d'un autre organe avec lequel la FRV interagit, directement ou indirectement, comme un capteur ou une unité de contrôle de détection de niveau de carburant FLSCU (« Fuel Level Sensing Control Unit » en anglais), la longévité et la performance de l'IDG peuvent s'en trouver amoindries. Par exemple, une défaillance capteur peut entraîner une fermeture non souhaitée de la FRV qui va entraîner une indésirable montée en température de l'huile servant à refroidir l'IDG.

Le document US 2022/090515 A1 décrit un procédé et un système de détection d'une consommation élevée d'huile dans un moteur d'un aéronef selon l'art antérieur.

Le document US 2021/388736 A1 est relatif à la surveillance de la durée de vie de l'huile dans une boîte de vitesses d'un démarreur de turbine à air selon l'art antérieur.

Il est alors souhaitable de pallier ces inconvénients de l'état de la technique. Il est notamment souhaitable de fournir une solution qui permette de détecter un dysfonctionnement subi par la FRV pouvant impacter le refroidissement de l'IDG. Il est par ailleurs souhaitable de fournir une solution qui soit simple et peu coûteuse.

### EXPOSE DE L'INVENTION

A cet effet, il est proposé un procédé de surveillance d'une vanne de retour carburant, dite FRV, contrôlant un flux de carburant, servant au refroidissement d'une huile alimentant un moteur de propulsion d'un aéronef et d'une huile d'un générateur d'entraînement intégré, dit IDG, depuis un système de distribution de carburant au moteur de propulsion vers un système de recirculation renvoyant du carburant chaud vers un réservoir de carburant de l'aéronef afin de permettre d'injecter dans le système de distribution de carburant du carburant plus froid en provenance dudit réservoir de carburant de l'aéronef, un premier capteur de température d'huile fournissant des mesures de température d'huile en port de sortie de l'IDG, un second capteur de température d'huile fournissant des mesures de température d'huile d'alimentation du moteur de propulsion, le procédé étant implémenté par un système de surveillance de fonctionnement de FRV sous forme de circuiterie électronique, le procédé étant caractérisé en ce qu'il comporte les étapes suivantes : déterminer, par vol de l'aéronef, un maximum de température d'huile en port de sortie de l'IDG d'après les mesures dudit premier capteur de température d'huile et/ou un maximum de température d'huile du moteur de propulsion d'après les mesures dudit second capteur de température d'huile ; évaluer une évolution de l'un et/ou l'autre des maximums de température d'huile sur plusieurs vols ; et générer une alarme lorsque l'évolution de l'un et/ou l'autre des maximums de température d'huile montre un dépassement d'un seuil prédéterminé T de température d'huile.

Ainsi, un dysfonctionnement subi par la FRV pouvant impacter le refroidissement de l'IDG est aisément détecté. La maintenance liée à la FRV est facilitée.

Dans un mode de réalisation particulier, l'alarme est générée lorsque l'évolution de l'un et/ou l'autre des maximums de température d'huile montre un dépassement dudit seuil prédéterminé T pendant Y vols d'une fenêtre glissante de Z vols consécutifs, avec Y et Z des valeurs prédéterminées telles que Y < Z.

Dans un mode de réalisation particulier, uniquement les mesures effectuées pendant les phases de vol de croisière de l'aéronef sont prises en compte.

Dans un mode de réalisation particulier, uniquement les mesures effectuées pendant des vols de l'aéronef de durée supérieure à un seuil de durée D prédéfini sont prises en compte.

Dans un mode de réalisation particulier, pour surveiller plusieurs FRV respectivement associées à plusieurs moteurs de propulsion de l'aéronef, le système de surveillance de fonctionnement de FRV est distribué dans des unités de contrôles respectivement associées aux moteurs de propulsion de l'aéronef.

Dans un mode de réalisation particulier, le système de surveillance de fonctionnement de FRV est centralisé dans l'avionique de l'aéronef.

Il est aussi proposé un produit programme d'ordinateur, qui peut être stocké sur un support et/ou téléchargé d'un réseau de communication, afin d'être lu par un processeur. Ce programme d'ordinateur comprend des instructions pour implémenter le procédé mentionné ci-dessus dans l'un quelconque de ses modes de réalisation, lorsque ledit programme est exécuté par le processeur. Il est aussi proposé un support non-transitoire de stockage d'informations sur lequel est stocké un tel programme d'ordinateur.

Il est aussi proposé un système de surveillance de fonctionnement d'une vanne de retour carburant, dite FRV, la FRV contrôlant un flux de carburant, servant au refroidissement d'une huile alimentant un moteur de propulsion d'un aéronef et d'une huile d'un générateur d'entraînement intégré, dit IDG, depuis un système de distribution de carburant au moteur de propulsion vers un système de recirculation renvoyant du carburant chaud vers un réservoir de carburant de l'aéronef afin de permettre d'injecter dans le système de distribution de carburant du carburant plus froid en provenance dudit réservoir de carburant de l'aéronef, un premier capteur de température d'huile fournissant des mesures de température d'huile en port de sortie de l'IDG, un second capteur de température d'huile fournissant des mesures de température d'huile d'alimentation du moteur de propulsion, le système de surveillance de fonctionnement de FRV étant sous forme de circuiterie électronique caractérisée en ce qu'elle est configurée pour implémenter les étapes suivantes : déterminer, par vol de l'aéronef, un maximum de température d'huile en port de sortie de l'IDG d'après les mesures dudit premier capteur de température d'huile et/ou un maximum de température d'huile du moteur de propulsion d'après les mesures dudit second capteur de température d'huile ; évaluer une évolution de l'un et/ou l'autre des maximums de température d'huile sur plusieurs vols ; et générer une alarme lorsque l'évolution de l'un et/ou l'autre des maximums de température d'huile montre un dépassement d'un seuil prédéterminé T de température d'huile.

Il est aussi proposé un aéronef comportant au moins un système de surveillance de fonctionnement d'une vanne de retour carburant, dite FRV, tel qu'évoqué ci-dessus

### BREVE DESCRIPTION DES DESSINS

Les caractéristiques de l'invention mentionnées ci-dessus, ainsi que d'autres, apparaîtront plus clairement à la lecture de la description suivante d'au moins un exemple de réalisation, ladite description étant faite en relation avec les dessins joints, parmi lesquels :
[Fig. 1] illustre schématiquement, en vue de dessus, un aéronef équipé de moteurs à propulsion respectivement munis de générateurs d'entraînement intégrés IDG ;
[Fig. 2] illustre schématiquement un algorithme de surveillance ; et
[Fig. 3] illustre schématiquement un exemple de plateforme matérielle configurée pour réaliser une implémentation de l'algorithme de la Fig. 2.

### EXPOSE DETAILLE DE MODES DE REALISATION

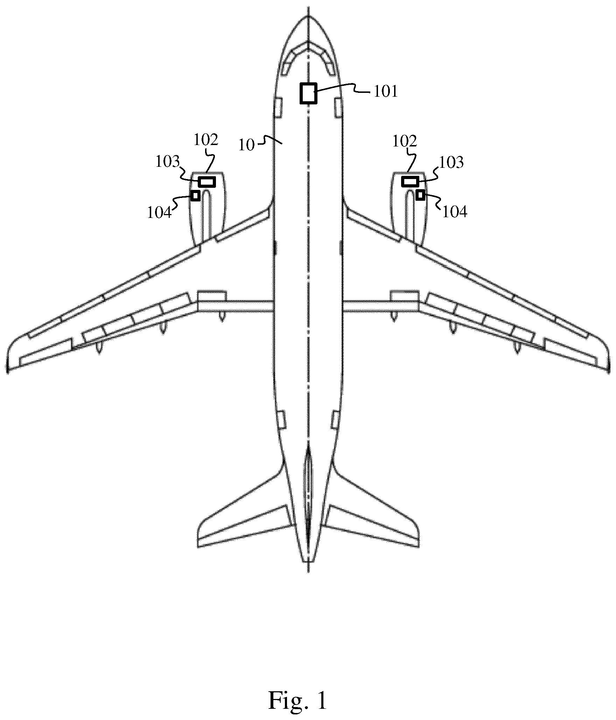

La **Fig. 1** illustre ainsi schématiquement, en vue de dessus, un aéronef 10. L'aéronef 10 comporte au moins un moteur de propulsion 102, préférentiellement de type turbomachine. Chaque moteur de propulsion 102 est muni d'un générateur d'entraînement intégré IDG 103. Chaque moteur de propulsion 102 est aussi préférentiellement muni d'une unité de contrôle de générateur GCU (« Generator Control Unit » en anglais) dont les fonctions principales sont de réguler et surveiller la fréquence et la tension de l'alternateur de l'IDG 103 du moteur de propulsion 102 en question, de surveiller les défauts "feeder", les surcharges et les inversions de phases, et de protéger le réseau électrique de l'aéronef 10 en commandant un contacteur de ligne de générateur GLC (« Generator Line Contactor » en anglais) associé. Chaque GCU est connectée à l'avionique 101 de l'aéronef 10, plus particulièrement à un système de surveillance électronique centralisé de l'aéronef ECAM (« Electronic Centralized Aircraft Monitoring » en anglais), de sorte à fournir au besoin des signaux d'alerte, notamment dans le cockpit de l'aéronef 10.

Chaque IDG 103 est classiquement équipé de deux capteurs de température d'huile : un capteur de température d'huile en port d'entrée (« inlet port » en anglais) et un autre capteur de température d'huile en port de sortie (« outlet port » en anglais). Ces capteurs sont typiquement des thermistors. Grâce à ces capteurs, la GCU associée à l'IDG 103 en question surveille la température de l'huile de l'IDG 103 et fournit un signal d'alerte en cas de dépassement de seuil prédéfini de température sur l'un et/ou l'autre de ces deux capteurs de température d'huile.

Chaque IDG 103 est associé à une vanne de retour carburant FRV 104 qui contrôle le flux de carburant, servant notamment au refroidissement de l'huile de l'IDG 103, depuis un système de distribution de carburant au moteur de propulsion 102, auquel est associé l'IDG 103, vers un système de recirculation renvoyant du carburant chaud vers un réservoir de carburant de l'aéronef. Une ouverture de la FRV permet d'accroître le flux de carburant circulant dans le système de distribution de carburant, ce carburant étant du carburant plus froid en provenance dudit réservoir de carburant de l'aéronef. La FRV 104 contrôle aussi ledit flux de carburant pour le refroidissement de l'huile dudit moteur de propulsion 102. Ainsi, l'huile de l'IDG 103 en question et l'huile dudit moteur de propulsion 102 sont mieux refroidies.

L'aéronef 10 est équipé d'un système de surveillance de fonctionnement de FRV 104. Le système de surveillance de fonctionnement de FRV 104 peut surveiller le fonctionnement de l'ensemble des FRV 104 de manière centralisée, par exemple au sein de l'avionique 101. En variante, le système de surveillance de fonctionnement de FRV 104 peut être distribué dans des unités de contrôle (sous forme de circuiterie électronique) associées respectivement aux moteurs de propulsion 102.

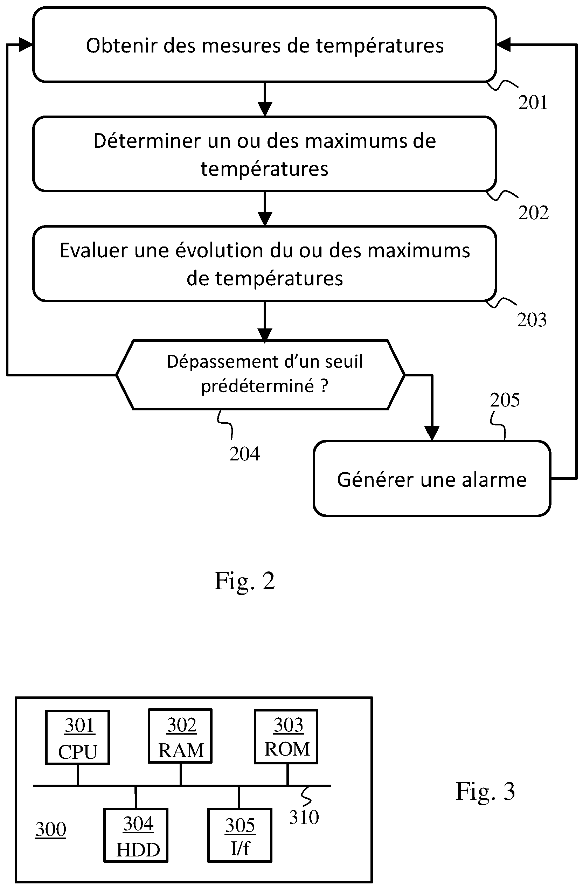

La **Fig. 2** illustre schématiquement un algorithme de surveillance de fonctionnement de FRV 104 implémenté par le système de surveillance de fonctionnement de FRV 104. L'algorithme de la Fig. 2 est implémenté en parallèle pour chaque FRV 104 de l'aéronef 10.

Dans une étape 201, le système de surveillance de fonctionnement de FRV 104 obtient des mesures de température en provenance du capteur de température d'huile en port de sortie de l'IDG 103 auquel la FRV 104 en question est associée et/ou des mesures de température en provenance du capteur de température d'huile alimentant le moteur de propulsion 102 auquel l'IDG 103 est associé.

Dans une étape 202, le système de surveillance de fonctionnement de FRV 104 détermine un maximum de température d'huile en port de sortie de l'IDG 103 d'après les mesures du capteur de température d'huile en port de sortie de l'IDG 103 en question et/ou un maximum de température d'huile du moteur de propulsion 102 concerné d'après les mesures du second capteur de température d'huile dudit moteur de propulsion 102. Chaque maximum est déterminé par vol de l'aéronef 10. Le système de surveillance de niveau d'huile d'IDG 103 effectue un enregistrement en mémoire non-volatile du ou des maximums déterminés, afin de pouvoir en suivre son ou leur évolution sur plusieurs vols consécutifs. Par exemple, l'évolution est considérée sur une fenêtre glissante de Z vols consécutifs, où Z est égal à 5. Au-delà de Z vols, le système de surveillance de niveau d'huile d'IDG 103 peut effacer tout enregistrement antérieur.

Préférentiellement, le système de surveillance de fonctionnement de FRV 104 prend en compte uniquement les mesures effectuées pendant les phases de vol de croisière de l'aéronef 10. Un palier d'altitude marqué par l'altimètre peut par exemple être utilisé pour détecter une phase de croisière. Ainsi, l'algorithme de surveillance de niveau d'huile opère sur une huile à température globalement stabilisée. Préférentiellement encore, pour les mêmes raisons, le système de surveillance de fonctionnement de FRV 104 prend en compte uniquement les mesures effectuées pendant des vols de durée supérieure à un seuil de durée D prédéfini, par exemple 30 minutes. Une horloge interne de l'avionique 101 peut par exemple être utilisée pour déterminer les temps de vol.

Dans une étape 203, le système de surveillance de fonctionnement de FRV 104 évalue une évolution du ou des maximums de température d'huile sur plusieurs vols, par exemple sur Z vols consécutifs (fenêtre glissante).

Dans une étape 204, le système de surveillance de fonctionnement de FRV 104 vérifie si l'évolution du ou des maximums de température d'huile montre un dépassement, par le maximum de température, d'un seuil prédéterminé T de température sur la fenêtre glissante. Par exemple, T est égal à 110°C.

Dans un mode de réalisation particulier, le système de surveillance de fonctionnement de FRV 104 vérifie si l'évolution du ou des maximums de température d'huile montre un dépassement dudit seuil T pendant Y vols de la fenêtre glissante de Z vols consécutifs, avec Y une valeur prédéterminée telle que Y < Z. Par exemple, Y est égal à 3.

Ainsi, si le système de surveillance de surveillance de fonctionnement de FRV 104 constate le dépassement dudit seuil T, une étape 205 est effectuée. Sinon, l'algorithme reboucle à l'étape 201 pour un prochain vol de l'aéronef 10.

Dans l'étape 205, le système de surveillance de fonctionnement de FRV 104 génère une alarme. Dans l'aéronef 10, l'alarme est préférentiellement générée dans le cockpit, à l'attention du pilote, et plus particulièrement, par le biais de l'ECAM. Ainsi, grâce à cette alarme générée automatiquement, la maintenance de l'aéronef 10 est facilitée.

L'alarme peut être réinitialisée, par exemple par une procédure dédiée auprès de l'avionique 101, lorsqu'une intervention de maintenance est réalisée sur la FRV 104 en question ou sur un organe avec lequel la FRV 104 interagit, directement ou indirectement, comme un capteur ou une unité de contrôle de détection de niveau de carburant FLSCU.

La **Fig. 3** illustre schématiquement un exemple d'une plateforme matérielle 300 du système de surveillance de fonctionnement de FRV 104, sous forme de circuiterie électronique, qui est adaptée et configurée pour implémenter l'algorithme de la Fig. 2. Comme déjà indiqué, le système de surveillance de fonctionnement de FRV 104 peut être centralisé dans l'avionique 101, ou distribué dans des unités de contrôles associées respectivement aux moteurs de propulsion 102.

La plateforme matérielle 300 comporte alors, reliés par un bus de communication 310 : un processeur ou CPU (« Central Processing Unit » en anglais) 301 ; une mémoire vive RAM (« Read-Only Memory » en anglais) 302 ; une mémoire morte 303, par exemple de type ROM (« Read Only Memory » en anglais) ou EEPROM (« Electrically-Erasable Programmable ROM » en anglais) ; une unité de stockage 304, telle qu'un disque dur HDD (« Hard Disk Drive » en anglais), ou un lecteur de support de stockage, tel qu'un lecteur de cartes SD (« Secure Digital » en anglais) ; et un gestionnaire d'interfaces I/f 305.

Le gestionnaire d'interfaces I/f 305 permet d'interagir avec un ou plusieurs équipements de l'aéronef 10, tels que les capteurs de température susmentionnés, et éventuellement avec un réseau de communication. Par exemple, le gestionnaire d'interfaces I/f 305 est adapté et configuré pour permettre d'interagir avec l'avionique 101.

Le processeur 301 est capable d'exécuter des instructions chargées dans la mémoire vive 302 à partir de la mémoire morte 303, d'une mémoire externe, d'un support de stockage (tel qu'une carte SD), ou d'un réseau de communication. Lorsque la plateforme matérielle 300 est mise sous tension, le processeur 301 est capable de lire de la mémoire vive 302 des instructions et de les exécuter. Ces instructions forment un programme d'ordinateur causant l'implémentation, par le processeur 301, de tout ou partie des étapes et fonctionnements décrits ici.

Tout ou partie des étapes et fonctionnements décrits ici peut ainsi être implémenté sous forme logicielle par exécution d'un ensemble d'instructions par une machine programmable, par exemple un processeur de type DSP (« Digital Signal Processor » en anglais) ou un microcontrôleur, ou être implémenté sous forme matérielle par une machine ou un composant électronique (« chip » en anglais) dédié ou un ensemble de composants électroniques (« chipset » en anglais) dédié, par exemple un composant FPGA (« Field Programmable Gate Array » en anglais) ou ASIC (« Application Specific Integrated Circuit » en anglais). D'une manière générale, la plateforme matérielle comporte de la circuiterie électronique adaptée et configurée pour implémenter les fonctionnements et étapes décrits ici.

## Revendications

1. Procédé de surveillance d'une vanne de retour carburant, dite FRV (104),
la vanne FRV contrôlant un flux de carburant, servant au refroidissement d'une huile alimentant un moteur de propulsion (102) d'un aéronef (10) et d'une huile d'un générateur d'entraînement intégré, dit IDG (103), depuis un système de distribution de carburant au moteur de propulsion (102) vers un système de recirculation renvoyant du carburant chaud vers un réservoir de carburant de l'aéronef (10), une ouverture de la FRV permettant d'accroître le flux de carburant circulant dans le système de distribution de carburant, ce carburant étant du carburant plus froid en provenance dudit réservoir de carburant de l'aéronef (10),
un premier capteur de température d'huile fournissant des mesures de température d'huile en port de sortie de l'IDG (103),
un second capteur de température d'huile fournissant des mesures de température d'huile d'alimentation du moteur de propulsion (102),
le procédé étant implémenté par un système de surveillance de fonctionnement de FRV (104) sous forme de circuiterie électronique, le procédé étant **caractérisé en ce qu'**il comporte les étapes suivantes :
- recevoir des mesures du premier capteur de température d'huile et du second capteur de température d'huile ;
- déterminer (202), par vol de l'aéronef (10), un maximum de température d'huile en port de sortie de l'IDG (103) d'après les mesures dudit premier capteur de température d'huile et/ou un maximum de température d'huile du moteur de propulsion (102) d'après les mesures dudit second capteur de température d'huile ;
- évaluer (203) une évolution de l'un et/ou l'autre des maximums de température d'huile sur plusieurs vols ; et
- générer (205) une alarme signalant un dysfonctionnement subi par la FRV, ce dysfonctionnement entraînant une fermeture non souhaitée de la FRV entraînant une montée en température indésirable de l'huile servant à refroidir l'IDG, lorsque l'évolution de l'un et/ou l'autre des maximums de température d'huile montre un dépassement d'un seuil prédéterminé T de température d'huile.

2. Procédé selon la revendication 1, dans lequel l'alarme est générée lorsque l'évolution de l'un et/ou l'autre des maximums de température d'huile montre un dépassement dudit seuil prédéterminé T pendant Y vols d'une fenêtre glissante de Z vols consécutifs, avec Y et Z des valeurs prédéterminées telles que Y < Z.

3. Procédé selon la revendication 1 ou 2, dans lequel uniquement les mesures effectuées pendant les phases de vol de croisière de l'aéronef (10) sont prises en compte.

4. Procédé selon l'une quelconque des revendications 1 à 3, dans lequel uniquement les mesures effectuées pendant des vols de l' aéronef (10) de durée supérieure à un seuil de durée D prédéfini sont prises en compte.

5. Procédé selon l'une quelconque des revendications 1 à 4, dans lequel, pour surveiller plusieurs FRV (104) respectivement associées à plusieurs moteurs de propulsion de l' aéronef (10), le système de surveillance de fonctionnement de FRV (104) est distribué dans des unités de contrôles respectivement associées aux moteurs de propulsion de l'aéronef (10).

6. Procédé selon l'une quelconque des revendications 1 à 4, dans lequel le système de surveillance de fonctionnement de FRV (104) est centralisé dans l'avionique (101) de l'aéronef (10).

7. Produit programme d'ordinateur, comportant des instructions entraînant l'exécution, par un processeur (301), du procédé selon l'une quelconque des revendications 1 à 6, lorsque lesdites instructions sont exécutées par le processeur (301).

8. Support de stockage, stockant un programme d'ordinateur comportant des instructions entraînant l'exécution, par un processeur (301), du procédé selon l'une quelconque des revendications 1 à 6, lorsque lesdites instructions sont lues et exécutées par le processeur (301).

9. Système de surveillance de fonctionnement d'une vanne de retour carburant, dite FRV (104),
la vanne FRV contrôlant un flux de carburant, servant au refroidissement d'une huile alimentant un moteur de propulsion (102) d'un aéronef (10) et d'une huile d'un générateur d'entraînement intégré, dit IDG (103), depuis un système de distribution de carburant au moteur de propulsion (102) vers un système de recirculation renvoyant du carburant chaud vers un réservoir de carburant de l'aéronef (10), un ouverture de la FRV permettant d'accroître le flux de carburant circulant dans le système de distribution de carburant, ce carburant étant du carburant plus froid en provenance dudit réservoir de carburant de l'aéronef (10),
le système de surveillance étant **caractérisé en ce qu'**il comprend :
un premier capteur de température d'huile fournissant des mesures de température d'huile en port de sortie de l'IDG (103),
un second capteur de température d'huile fournissant des mesures de température d'huile d'alimentation du moteur de propulsion (102), et
une circuiterie électronique configurée pour implémenter les étapes suivantes :
- recevoir des mesures du premier capteur de température d'huile capteur et du second capteur de température d'huile ;
- déterminer (202), par vol de l'aéronef (10), un maximum de température d'huile en port de sortie de l'IDG (103) d'après les mesures dudit premier capteur de température d'huile et/ou un maximum de température d'huile du moteur de propulsion (102) d'après les mesures dudit second capteur de température d'huile ;
- évaluer (203) une évolution de l'un et/ou l'autre des maximums de température d'huile sur plusieurs vols ; et
- générer (205) une alarme signalant un dysfonctionnement subi par la FRV, ce dysfonctionnement entraînant une fermeture non souhaitée de la FRV entraînant une montée en température indésirable de l'huile servant à refroidir l'IDG, lorsque l'évolution de l'un et/ou l'autre des maximums de température d'huile montre un dépassement d'un seuil prédéterminé T de température d'huile.

10. Aéronef (10) comportant au moins un système de surveillance de fonctionnement de FRV (104) selon la revendication 9.

## Patentansprüche

1. Verfahren zum Überwachen eines Kraftstoffrücklaufventils, genannt FRV (104), wobei das FRV einen Kraftstoffstrom steuert, der zum Kühlen eines Öls, das einen Antriebsmotor (102) eines Flugzeugs (10) versorgt, und eines Öls eines integrierten Antriebsgenerators, genannt IDG (103), von einem Kraftstoffverteilungssystem an den Antriebsmotor (102) zu einem Rezirkulationssystem dient, das heißen Kraftstoff zu einem Kraftstofftank des Flugzeugs (10) zurückführt, wobei ein Öffnen des FRV es ermöglicht, den durch das Kraftstoffverteilungssystem fließenden Kraftstoffdurchfluss zu erhöhen, wobei dieser Kraftstoff kälterer Kraftstoff aus dem Kraftstofftank des Flugzeugs (10) ist, ein erster Öltemperatursensor Messungen der Öltemperatur am Ausgangsanschluss des IDG (103) liefert, ein zweiter Öltemperatursensor Messungen der Öltemperatur der Versorgung des Antriebsmotors (102) liefert, wobei das Verfahren von einem System zur Überwachung des Betriebs des FRV (104) in Form eines elektronischen Schaltkreises implementiert wird, wobei das Verfahren **dadurch gekennzeichnet ist, dass** es die folgenden Schritte aufweist:
- Empfangen der Messungen des ersten Öltemperatursensors und des zweiten Öltemperatursensors;
- Bestimmen (202), pro Flug des Flugzeugs (10), eines Öltemperaturmaximums am Ausgangsanschluss des IDG (103) auf der Grundlage der Messungen des ersten Öltemperatursensors und/oder eines Öltemperaturmaximums des Antriebsmotors (102) auf der Grundlage der Messungen des zweiten Öltemperatursensors;
- Auswerten (203) einer Entwicklung des einen und/oder des anderen Öltemperaturmaximums über mehrere Flüge und
- Erzeugen (205) eines Alarms, der eine vom FRV erfittene Fehlfunktion signalisiert, wobei diese Fehlfunktion zu einem unerwünschten Schließen des FRV führt, das einen unerwünschten Temperaturanstieg des Öls zur Folge hat, das zur Kühlung des IDG dient, wenn der Verlauf des einen und/oder des anderen Öltemperaturmaximums eine Überschreitung eines vorbestimmten Öltemperaturschwellenwerts T zeigt.

2. Verfahren nach Anspruch 1, wobei der Alarm erzeugt wird, wenn der Verlauf des einen und/oder des anderen Öltemperaturmaximums eine Überschreitung des vorbestimmten Schwellenwerts T während Y Flügen eines gleitenden Fensters von Z aufeinanderfolgenden Flügen zeigt, wobei Y und Z so vorbestimmte Werte sind, dass Y < Z ist.

3. Verfahren nach Anspruch 1 oder 2, wobei nur Messungen berücksichtigt werden, die während der Reiseflugphasen des Flugzeugs (10) durchgeführt werden.

4. Verfahren nach einem der Ansprüche 1 bis 3, wobei nur Messungen berücksichtigt werden, die während Flügen des Flugzeugs (10) durchgeführt wurden, die länger als ein vordefinierter Schwellenwert für die Dauer D dauerten.

5. Verfahren nach einem der Ansprüche 1 bis 4, wobei zur Überwachung mehrerer FRV (104), die jeweils mit einem von mehreren Antriebsmotoren des Flugzeugs (10) verbunden sind, das System zur Überwachung des Betriebs des FRV (104) in Steuereinheiten verteilt ist, die den jeweiligen Antriebsmotoren des Flugzeugs (10) zugeordnet sind.

6. Verfahren nach einem der Ansprüche 1 bis 4, wobei das System zur Überwachung des Betriebs des FRV (104) in der Bordelektronik (101) des Flugzeugs (10) zentralisiert ist.

7. Computerprogrammprodukt, das Anweisungen aufweist, die die Ausführung, durch einen Prozessor (301), des Verfahrens nach einem beliebigen der Ansprüche 1 bis 6 bewirken, wenn die Anweisungen durch den Prozessor(301) ausgeführt werden.

8. Speichermedium, das ein Computerprogramm speichert, das Anweisungen aufweist, die die Ausführung, durch einen Prozessor (301), des Verfahrens nach einem beliebigen der Ansprüche 1 bis 6 bewirken, wenn die Anweisungen durch den Prozessor (301) gelesen und ausgeführt werden.

9. System zum Überwachen des Betriebs eines Kraftstoffrücklaufventils, genannt FRV (104), wobei das FRV einen Kraftstoffstrom steuert, der zum Kühlen eines Öls, das einen Antriebsmotor (102) eines Flugzeugs (10) versorgt, und eines Öls eines integrierten Antriebsgenerators, genannt IDG (103), von einem Kraftstoffverteilungssystem an den Antriebsmotor (102) zu einem Rezirkulationssystem dient, das heißen Kraftstoff zu einem Kraftstofftank des Flugzeugs (10) zurückführt, wobei ein Öffnen des FRV es ermöglicht, den durch das Kraftstoffverteilungssystem fließenden Kraftstoffdurchfluss zu erhöhen, wobei dieser Kraftstoff kälterer Kraftstoff aus dem Kraftstofftank des Flugzeugs (10) ist, wobei das Überwachungssystem **dadurch gekennzeichnet ist, dass** es Folgendes aufweist:
einen ersten Öltemperatursensor, der Messungen der Öltemperatur am Ausgangsanschluss des IDG (103) liefert, einen zweiten Öltemperatursensor, der Messungen der Öltemperatur der Versorgung des Antriebsmotors (102) liefert, und
eine elektronische Schaltungsanordnung, die dazu konfiguriert ist, die folgenden Schritte zu implementieren:
- Empfangen der Messungen des ersten Sensoröltemperatursensors und des zweiten Öltemperatursensors;
- Bestimmen (202), pro Flug des Flugzeugs (10), eines Öltemperaturmaximums am Ausgangsanschluss des IDG (103) auf der Grundlage der Messungen des ersten Öltemperatursensors und/oder eines Öltemperaturmaximums des Antriebsmotors (102) auf der Grundlage der Messungen des zweiten Öltemperatursensors;
- Auswerten (203) einer Entwicklung des einen und/oder des anderen Öltemperaturmaximums über mehrere Flüge und
- Erzeugen (205) eines Alarms, der eine vom FRV erfittene Fehlfunktion signalisiert, wobei diese Fehlfunktion zu einem unerwünschten Schließen des FRV führt, das einen unerwünschten Temperaturanstieg des Öls zur Folge hat, das zur Kühlung des IDG dient, wenn der Verlauf des einen und/oder des anderen Öltemperaturmaximums eine Überschreitung eines vorbestimmten Öltemperaturschwellenwerts T zeigt.

10. Flugzeug (10) mit mindestens einem System zur Überwachung des Betriebs des FRV (104) nach Anspruch 9.

## Claims

1. Method for monitoring a fuel return valve, called FRV (104), the FRV valve controlling a flow of fuel, used to cool an oil feeding a propulsion engine (102) of an aircraft (10) and an oil of an integrated drive generator, called IDG (103), from a system for distributing fuel to the propulsion engine (102) to a recirculation system returning hot fuel to a fuel tank of the aircraft (10), an aperture of the FRV making it possible to increase the flow of fuel circulating in the fuel distribution system, this fuel being colder fuel originating from said fuel tank of the aircraft (10), a first oil temperature sensor supplying measurements of the temperature of oil at an outlet port of the IDG (103), a second oil temperature sensor supplying measurements of the temperature of oil feeding the propulsion engine (102), the method being implemented by an FRV (104) operation monitoring system in the form of electronic circuitry, the method being **characterized in that** it comprises the following steps:
- receiving measurements from the first oil temperature sensor and from the second oil temperature sensor;
- determining (202), for each flight of the aircraft (10), an oil temperature maximum at the outlet port of the IDG (103) according to the measurements of said first oil temperature sensor and/or an oil temperature maximum of the propulsion engine (102) according to the measurements of said second oil temperature sensor;
- assessing (203) a trend of one and/or the other of the oil temperature maxima over several flights; and
- generating (205) an alarm flagging a malfunction experienced by the FRV, this malfunction leading to an undesirable closure of the FRV leading to an undesirable temperature rise of the oil used to cool the IDG, when the trend of one and/or the other of the oil temperature maxima shows that a predetermined oil temperature threshold T has been exceeded.

2. Method according to Claim 1, wherein the alarm is generated when the trend of one and/or the other of the oil temperature maxima shows that said predetermined threshold T has been exceeded during Y flights of a sliding window of Z consecutive flights, with Y and Z predetermined values such that Y < Z.

3. Method according to Claim 1 or 2, wherein only the measurements performed during the cruising flight phases of the aircraft (10) are taken into account.

4. Method according to any one of Claims 1 to 3, wherein only the measurements performed during flights of the aircraft (10) of a duration greater than a predefined duration threshold D are taken into account.

5. Method according to any one of Claims 1 to 4, wherein, to monitor several FRVs (104) respectively associated with several propulsion engines of the aircraft (10), the FRV (104) operation monitoring system is distributed in control units respectively associated with the propulsion engines of the aircraft (10).

6. Method according to any one of Claims 1 to 4, wherein the FRV (104) operation monitoring system is centralized in the avionics (101) of the aircraft (10).

7. Computer program product, comprising instructions driving the execution, by a processor (301), of the method according to any one of Claims 1 to 6, when said instructions are executed by the processor (301).

8. Storage medium, storing a computer program comprising instructions driving the execution, by a processor (301), of the method according to any one of Claims 1 to 6, when said instructions are read and executed by the processor (301).

9. System for monitoring operation of a fuel return valve, called FRV (104), the FRV valve controlling a flow of fuel, used to cool an oil feeding a propulsion engine (102) of an aircraft (10) and an oil of an integrated drive generator, called IDG (103), from a system for distributing fuel to the propulsion engine (102) to a recirculation system returning hot fuel to a fuel tank of the aircraft (10), an aperture of the FRV making it possible to increase the flow of fuel circulating in the fuel distribution system, this fuel being colder fuel originating from said fuel tank of the aircraft (10), the monitoring system being **characterized in that** it comprises:
a first oil temperature sensor supplying measurements of the temperature of oil at an outlet port of the IDG (103), a second oil temperature sensor supplying measurements of the temperature of oil feeding the propulsion engine (102), and
electronic circuitry configured to implement the following steps:
- receiving measurements from the first sensor oil temperature sensor and from the second oil temperature sensor;
- determining (202), for each flight of the aircraft (10), an oil temperature maximum at the outlet port of the IDG (103) according to the measurements of said first oil temperature sensor and/or an oil temperature maximum of the propulsion engine (102) according to the measurements of said second oil temperature sensor;
- assessing (203) a trend of one and/or the other of the oil temperature maxima over several flights; and
- generating (205) an alarm flagging a malfunction experienced by the FRV, this malfunction leading to an undesirable closure of the FRV leading to an undesirable temperature rise of the oil used to cool the IDG, when the trend of one and/or the other of the oil temperature maxima shows that a predetermined oil temperature threshold T has been exceeded.

10. Aircraft (10) comprising at least one FRV (104) operation monitoring system according to Claim 9.
